# EUROPEAN PATENT SPECIFICATION

(11) **EP 2 279 300 B1**
(45) Date of publication and mention of the grant of the patent: **12.10.2016**
(21) Application number: 09746871.4
(22) Date of filing: 12.05.2009
(51) Int. Cl.: E01C 11/26, F24J 3/00

(54) **DEVICE FOR PREVENTING ICE FORMATION ON A SURFACE LAYER**
VORRICHTUNG ZUR VERHINDERUNG DER ENTSTEHUNG VON EIS AUF EINER OBERFLÄCHENSCHICHT
DISPOSITIF POUR EMPÊCHER LA FORMATION DE GLACE SUR UNE COUCHE DE SURFACE

(30) Priority: 14.05.2008 SE 0801090
(43) Date of publication of application: 02.02.2011
(73) Proprietor: Aquavilla AB, 171 73 Solna (SE)
(72) Inventor: BERGSTRÖM, Richard, 169 57 Solna (SE)
(74) Representative: Zacco Sweden AB
(86) International application number: PCT/SE2009/050532
(87) International publication number: WO 2009/139711

(56) References cited:
- WO-A1-2005/095199
- DE-A1- 2 608 682
- DE-A1- 2 913 151
- US-A- 4 305 681

## Description

### TECHNICAL FIELD

This invention relates to a concrete cofferdam defining a closed space and being arranged to be received floating in a volume of water and comprising a collector conduit for a circulating fluid connected to a heat conduit, and adapted to absorb heat from the volume of water.

### BACKGROUND

It is generally known to prevent formation of ice on top of outdoor surface layers such as market places and pavements, by heating lines located in the surface layers. From WO2005/095199A1 it is further known to heat a space in a floating concrete construction by means of the surrounding water.

### DISCLOSURE OF THE INVENTION

An object of the present invention is to further develop the prior art, whereby a surface layer disposed on a bridge deck in the vicinity of the volume of water can be kept free of ice by means of heat from the volume of water.

According to an aspect of the invention, the cofferdam has
a roof forming a bridge deck of the cofferdam;
a heat conduit for a circulating fluid received in the surface layer and connected to the collector conduit for emitting heat to the surface layer.

The concrete cofferdam can form a part of a pier assembled from a plurality of concrete cofferdams.

The concrete cofferdam can also form a substructure for a building construction such as a floating home.

In one embodiment the circulating fluid can be collected directly from the water in the volume of water. A pump may thus circulate sea or lake water directly into the collector conduit from the natural volume of water and through the heat conduit.

The circulating fluid can, however, also collect heat by heat exchange with the volume of water. The collector conduit and the heat conduit can then form a closed loop in common that contains a heat receiving and emitting fluid.

The circulating fluid can also collect heat from the volume of water via a heat pump.

Other features and advantages with the invention may be apparent from the appended claims and the following description of exemplary embodiments.

### BRIEF DESCRIPTION OF THE DRAWING

FIG. 1 is a diagrammatic sectional view of an arrangement according to the invention;
FIG. 2 is an oblique view from above of a floating construction provided with an arrangement according to the invention;
FIG. 3 is a sectional view along the plane 3 of FIG. 2 of a floating construction having a modified arrangement according to the invention; and
FIG. 4 is a plane view of a plurality of connected floating constructions according to the invention.

### DETAILED DESCRIPTION OF EMBODIMENTS

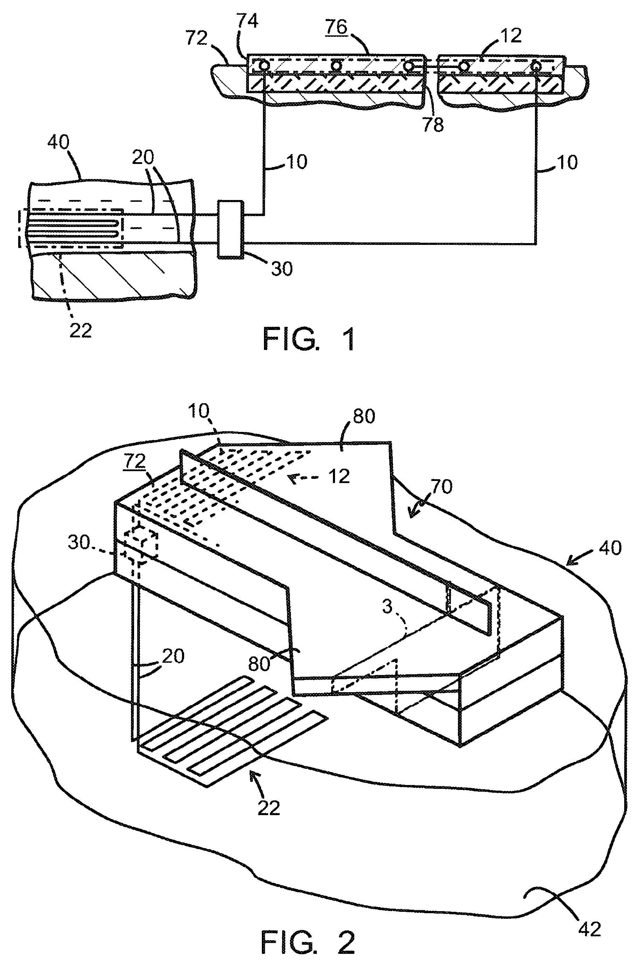

FIG. 1 generally shows a surface layer 74 of concrete having cast therein a surface heater or a surface heating loop or coil 12 comprising a heat conduit 10 for a circulating and heat emitting fluid adapted to prevent weather-induced formation of ice by emission of heat to a top surface 76 of the surface layer 74. Surface layer 74 is placed on an insulating layer 78 to prevent heat emission from the coil to a supporting layer 72. While the supporting layer may be a ground layer below a pavement, for example, in the exemplary embodiment shown on FIGS. 2-4, the supporting layer 72 is a top layer forming a bridge deck on the upper side of a floating construction in the shape of a concrete cofferdam 70.

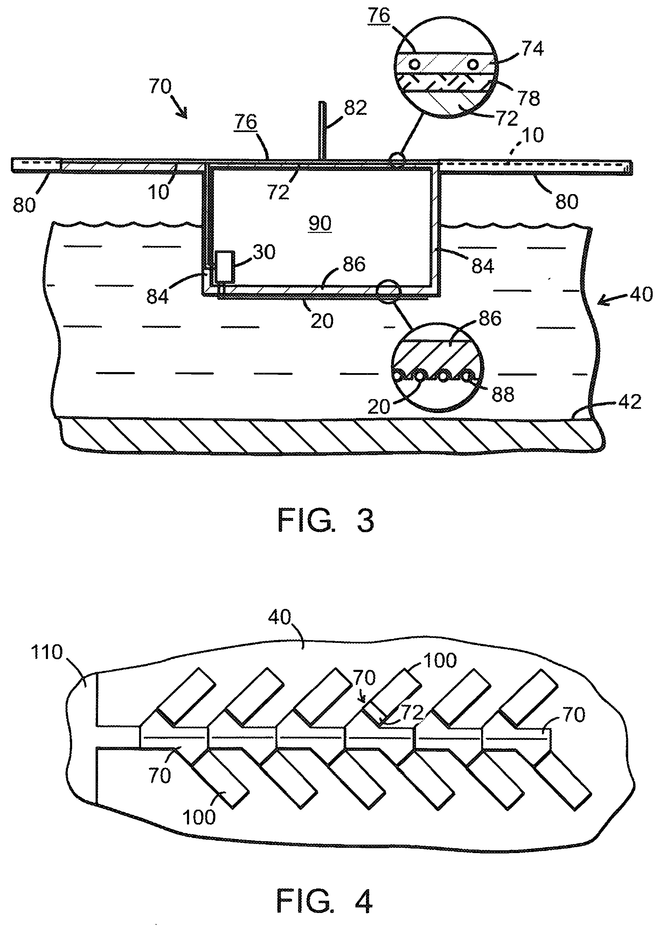

The heat pipe conduit 10 is connected to a collector pipe conduit 20 for receiving heat from a volume or mass of water 40, such as a sea, lake or possibly a man-made volume of water, in relative proximity to the surface layer 74. Collector conduit 20 comprises a collector loop or coil 22 located in the volume of water. Collector coil 22 can be placed on a floor 42 of the volume 40 of water, as indicated in FIG. 1 and 2. Collector coil 22 may, however, also be located at the underside of the concrete cofferdam 70, as shown in FIG. 3. More precisely, coil 22 may in a way known per se be placed in recesses or grooves 88 in the bottom 86 of the concrete cofferdam 70, or also be molded (not show) into the bottom 86 of the cofferdam 70. Such a recessed or molded-in coil may then be protected against various kinds of external influences such as anchoring of sea vessels.

In one embodiment, the heat conduit 10 can collect the heat emitting fluid directly from the volume of water. In a manner not shown, collector conduit 20 then has an open inlet end and an open outlet end to circulate water directly from the volume 40 of water through the heat conduit 10 and its coil 12. In that case, a control center 30 may comprise a circulation pump (not shown) for the water.

In another embodiment the heat conduit 10 and the collector conduit 20 may in common form a closed coil containing a heat receiving and emitting fluid that by heat exchange receives heat from the volume 40 of water and emits heat to the surface layer 74. In that case the control center 30 also has a circulation pump.

In still another embodiment the collector conduit 20 can be closed and contain a heat receiving and emitting fluid that received heat from the volume 40 of water and by heat exchange emits heat to the heat conduit 10. In that case the control center 30 can include a heat pump.

As apparent from FIGS. 2-4, the concrete cofferdam 70 can be a modular element included in a pier or bridge for access to a plurality of building constructions in the ahape of, for example, floating homes 100.

As apparent from FIG. 4, also the buildings 100 can be places on substructures i the shape of concrete cofferdams 70 provided with bridge decks or supporting layers 72 according to the invention.

The concrete cofferdam 70defines an closed space 90 in which the control center 30 can be located. The concrete cofferdam 70 may further be provided with laterally oriented projections 80 to which the floating homes 100 may be anchored. As apparent from FIG.2 and 3,the heat conduit 10, may also extend in the projections 80 so that they also can be kept free from ice formation.

In different embodiments of the invention, the control center 30, besides circulation pumps, may include leveling vessels, filling/emptying possibilities, deaerators, expansion vessels, possible filters as well as possibilities for connection of conduits that heat other surrounding constructions, for example the floating homes, houseboats. Piers, cofferdams etc., to thereby heat not only the object in which it is housed.

As is partially apparent from the foregoing, the design of the control central 30 can be dependent on the function of the collector and the heating coil in accordance with the following alternative embodiments:

Som delvis framgår av det föregående, kan utformningen av drivcentralen 30 kan vara beroende av kollektorns och ytvärmeslingans funktion enligt följande alternativa utföringsformer:
1) The collector and the heating coil may be an open system where the center 30 in principle consists of a circulation pump and a possible filter. In that case the collector has no function, as water is drawn directly from the volume of water and passes through the surface heating coil. (The collector then forms only a pressure drop, without any heat accumulating function - it is accordingly not needed in this embodiment.)
2) The collector and the surface heating coil are closed but are open relative to each other. Control center 30 then includes at least one circulation pump, filling-emptying device, expansion vessel, security valve and deaerator. The same fluid circulates through the collector and the surface heating coil.
3) The collector and the surface heater coil are both closed circuits, and-the heat transfer is performed in a heat exchanger. In that case are needed two circulation pumps etc. An advantage in that case is that two types of fluids may be used, if needed. (Larger temperature variations are obtained at the surface layer, from minus degrees to maybe 40 °C in summer and high sunshine.)
4) As above, but now the heat exchanger is replaced by a heat punp that upgrades the heat from the collector to temperatures that are higher than the collector temperature. (It is to be noted that in the three cases discussed above the temperature of the surface heater is always lower than that of the collector.) The center 30 comprises the heat pump as well as the remaining surrounding components according to the above paragraphs.

When the cofferdams are serially connected, there should be at least one common control center that serves the other centers, i.e. the center having for example a heat pump, is then not present in each of the other centers. The center in one cofferdam may, however, be connected to the center in the next cofferdam via feeding pipes (not shown).

## Claims

1. A concrete cofferdam (70) defining a closed space (90) and adapted to be received floating in a volume (40) of water and comprising a collector conduit (20, 22) for a circulating fluid and connected to a heat conduit and adapted to receive heat from the volume (40) of water,
**characterized by**
a roof forming a bridge deck (72, 80) of the cofferdam;
a surface layer (74) provided onto a heat insulating layer (78) of the bridge deck (72, 80); and
a heat conduit (10, 12) for a circulating fluid and received in the surface layer (74) and connected to the collector conduit for emitting heat to the surface layer.

2. The concrete cofferdam according to claim 1, said cofferdam forming a part of a pier assembled of a plurality of concrete cofferdams (70)

3. The concrete cofferdam according to claim 1, said cofferdam forming a substructure for a building construction (100).

4. The concrete cofferdam according to any of the previous claims, wherein the circulating fluid is collected directly from the water in the volume (40) of water.

5. The concrete cofferdam according to claim 1 or 2, wherein the circulating fluid collects heat by heat exchange with the volume (40) of water.

6. The concrete cofferdam according to claim 4, wherein the circulating fluid collects heat from the volume (40) of water via a heat pump (30).

## Patentansprüche

1. Betonkofferdamm (70), der einen geschlossenen Raum (90) definiert und dazu angepasst ist, schwimmend in einem Wasservolumen (40) aufgenommen zu werden, umfassend einen Kollektorkreis (20, 22) für eine zirkulierende Flüssigkeit, der an eine Heizleitung angeschlossen und dazu angepasst ist, Wärme aus dem Wasservolumen (40) aufzunehmen,
**gekennzeichnet durch**
ein als Brückenfahrbahn (72, 80) ausgebildetes Dach des Kofferdamms; eine auf einer wärmeisolierenden Schicht (78) aufgebrachte Oberflächenschicht (74) der Brückenfahrbahn (72, 80); und
eine Heizleitung (10, 12) für eine zirkulierende Flüssigkeit, die in die Oberflächenschicht (74) aufgenommen und an den Kollektorkreis zur Abgabe von Wärme an die Oberflächenschicht angeschlossen ist.

2. Betonkofferdamm nach Anspruch 1, wobei der genannte Kofferdamm einen Teil einer aus einer Vielzahl von Betonkofferdämmen zusammengefügten Pier bildet (70)

3. Betonkofferdamm nach Anspruch 1, wobei der genannte Kofferdamm einen Unterbau für ein Bauwerk bildet (100)

4. Betonkofferdamm nach einem der vorstehenden Ansprüche, wobei die zirkulierende Flüssigkeit direkt aus dem Wasser im Wasservolumen (40) aufgenommen wird.

5. Betonkofferdamm nach Anspruch 1 oder 2, wobei die zirkulierende Flüssigkeit Wärme durch Wärmeaustausch mit dem Wasservolumen (40) aufnimmt.

6. Betonkofferdamm nach Anspruch 4, wobei die zirkulierende Flüssigkeit Wärme aus dem Wasservolumen (40) über eine Wärmepumpe (30) aufnimmt.

## Revendications

1. Batardeau en béton (70) délimitant un espace clos (90), adapté pour être reçu flottant dans un volume (40) d'eau et comprenant une conduite collectrice (20, 22) destinée à un fluide circulant, laquelle est reliée à une conduite de chaleur et adaptée pour recevoir de la chaleur issue du volume (40) d'eau,
**caractérisé par**
un toit constituant un pont de passage (72, 80) du batardeau ;
une couche de surface (74) agencée sur une couche d'isolation thermique (78) du pont de passage (72, 80) ; et
une conduite de chaleur (10, 12) destinée à un fluide circulant, reçue dans la couche de surface (74) et reliée à la conduite collectrice pour transmettre de la chaleur à la couche de surface.

2. Batardeau en béton selon la revendication 1, ledit batardeau constituant une partie d'une jetée composée d'une pluralité de batardeaux en béton (70).

3. Batardeau en béton selon la revendication 1, ledit batardeau constituant une sous-structure pour une construction de bâtiment (100).

4. Batardeau en béton selon l'une quelconque des revendications précédentes, dans lequel le fluide circulant provient directement de l'eau contenue dans le volume (40) d'eau.

5. Batardeau en béton selon la revendication 1 ou 2, dans lequel le fluide circulant absorbe de la chaleur par échange thermique avec le volume (40) d'eau.

6. Batardeau en béton selon la revendication 4, dans lequel le fluide circulant absorbe de la chaleur issue du volume (40) d'eau par l'intermédiaire d'une pompe à chaleur (30).
